(19) Europäisches Patentamt / European Patent Office / Office européen des brevets

(11) **EP 3 320 387 B1**

(12) **FASCICULE DE BREVET EUROPEEN**

(45) Date de publication et mention de la délivrance du brevet:
**04.10.2023 Bulletin 2023/40**

(21) Numéro de dépôt: **16747829.6**

(22) Date de dépôt: **07.07.2016**

(51) Classification Internationale des Brevets (IPC):
***G02C 7/10*** *(2006.01)*

(52) Classification Coopérative des Brevets (CPC):
**G02C 11/10; G02C 7/101; G02F 1/163;**
G02F 2201/58

(86) Numéro de dépôt international:
**PCT/FR2016/051719**

(87) Numéro de publication internationale:
**WO 2017/009544 (19.01.2017 Gazette 2017/03)**

(54) **COMMANDE PAR PALIER DE LA TRANSMISSION D'UN VERRE À TRANSMISSION VARIABLE**

BEREICHSBASIERTE STEUERUNG DER DURCHLÄSSIGKEIT EINER LINSE MIT VARIABLER DURCHLÄSSIGKEIT

RANGE-BASED CONTROL OF THE TRANSMISSION OF A VARIABLE TRANSMISSION LENS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.07.2015 FR 1556623**

(43) Date de publication de la demande:
**16.05.2018 Bulletin 2018/20**

(73) Titulaire: **Essilor International (Compagnie Générale d'Optique) 94220 Charenton Le Pont (FR)**

(72) Inventeurs:
- **PELOUX, Marius**
  **94227 Charenton le Pont Cedex (FR)**
- **GILBERT, Cédric**
  **94227 Charenton le Pont Cedex (FR)**
- **ARCHAMBEAU, Samuel**
  **94227 Charenton le Pont Cedex (FR)**

(74) Mandataire: **Plasseraud IP 66, rue de la Chaussée d'Antin 75440 Paris Cedex 09 (FR)**

(56) Documents cités:
WO-A1-2014/087448    WO-A2-2008/078320
US-A- 5 841 507    US-A1- 2002 154 379
US-A1- 2013 048 836    US-A1- 2014 020 147

- Maxim: "MAX44009 Industry's Lowest-Power Ambient Light Sensor with ADC", Datasheet , 16 avril 2013 (2013-04-16), XP002756437, Extrait de l'Internet: URL:https://web.archive.org/web/20130416052733/http://datasheets.maximintegrated.com/en/ds/MAX44009.pdf [extrait le 2016-04-13] cité dans la demande

**Description**

L'invention concerne la commande par palier de la transmission d'un verre à transmission variable destiné, par exemple, à être utilisé dans un système portable tel que des lunettes connectées. L'invention concerne plus particulièrement un dispositif à transmission variable ainsi qu'un procédé de commande de la transmission d'un verre à transmission variable d'un tel dispositif.

On connait des dispositifs comprenant des verres à transmission variable dont la transmission peut varier automatiquement en fonction de la luminosité ambiante dans laquelle se trouve le porteur. Le verre à transmission variable est alors relié électriquement à un circuit de commande autonome énergétiquement, soit disposant d'une batterie ou d'un système de recueil d'énergie, comprenant un capteur adapté pour mesurer un éclairement, le circuit de commande étant adapté pour commander automatiquement la valeur de transmission du verre à transmission variable en fonction de l'éclairement mesuré par le capteur.

Toutefois, la consommation électrique du circuit de commande d'une part et celle des verres à transmission d'autre part peut s'avérer trop importante, de sorte qu'il est nécessaire de recharger fréquemment la batterie qui alimente les composants électroniques du dispositif. Ceci peut s'avérer particulièrement gênant pour le porteur du dispositif.

Les documents suivants représentent l'art antérieur:

US 2013/048836 A1 (BURT DAMIEN P [US] ET AL) 28 février 2013 (2013-02-28) divulgue des lunettes dont la transmission varie avec la lumière ambiante. Maxim: "MAX44009 Industry's Lowest-Power Ambient Light Sensor with ADC", 16 avril 2013 (2013-04-16) divulgue un capteur de lumière dont les paliers peuvent être configurés. WO 2008/078320 A2 (GROSS YOSSI [IL]) 3 juillet 2008 (2008-07-03) divulgue des lunettes dont la transmission varie avec la lumière ambiante. US 2002/154379 A1 (TONAR WILLIAM L [US] ET AL) 24 octobre 2002 (2002-10-24) divulgue un miroir dans une voiture dont la réflexion varie avec la lumière ambiante. WO 2014/087448 A1 (COLORLINK JAPAN LTD [JP]) 12 juin 2014 (2014-06-12); & US 2015/346517 A1 (IIGAHAMA YUKIO [JP] ET AL) 3 décembre 2015 (2015-12-03) divulgue des lunettes dont la transmission varie avec la lumière ambiante.

Aucun de ces documents ne divulgue que le circuit de commande est adapté pour utiliser une fonction de mérite dépendant d'une pluralité de critères pour définir les paliers successifs d'éclairement de façon à définir un grand nombre de paliers de fonctionnement lorsque la batterie est complètement chargée et un nombre de paliers de fonctionnement moins élevé lorsque la batterie se décharge afin de diminuer la consommation électrique du dispositif.

L'invention vise à résoudre au moins partiellement les inconvénients exposés ci-dessus et, plus particulièrement, vise à commander la transmission du verre en fonction de l'éclairement mesuré par un capteur tout en assurant un confort visuel au porteur et en minimisant la consommation électrique du dispositif.

L'invention est définie par les revendications.

On décrit maintenant l'invention à l'aide des dessins, dans lesquels :

- La figure 1 est une représentation schématique d'un exemple de réalisation d'un système ophtalmique selon l'invention ;
- La figure 2 est une représentation d'une fonction cible Tv,cible représentant la transmission d'un verre photochromique instantané en fonction de l'éclairement;
- Les figures 3A et 3B sont des exemples de mesures de l'éclairement, en fonction du temps selon deux situations différentes, l'axe de gauche représentant l'éclairement mesuré en lux et l'axe de droite représentant la transmission du verre comprise entre 0 et 1 ;
- La figure 4 représente un tableau montrant la correspondance entre les paliers de l'éclairement, en particulier d'éclairement en lux, et la valeur des consigne de transmission du verre; et
- La figure 5 est une représentation schématique des étapes du procédé de commande de la transmission d'un verre à transmission variable.

Il est à noter que sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Par souci de clarté, seuls les éléments utiles à la compréhension des modes de réalisation décrits ont été représentés et seront détaillés.

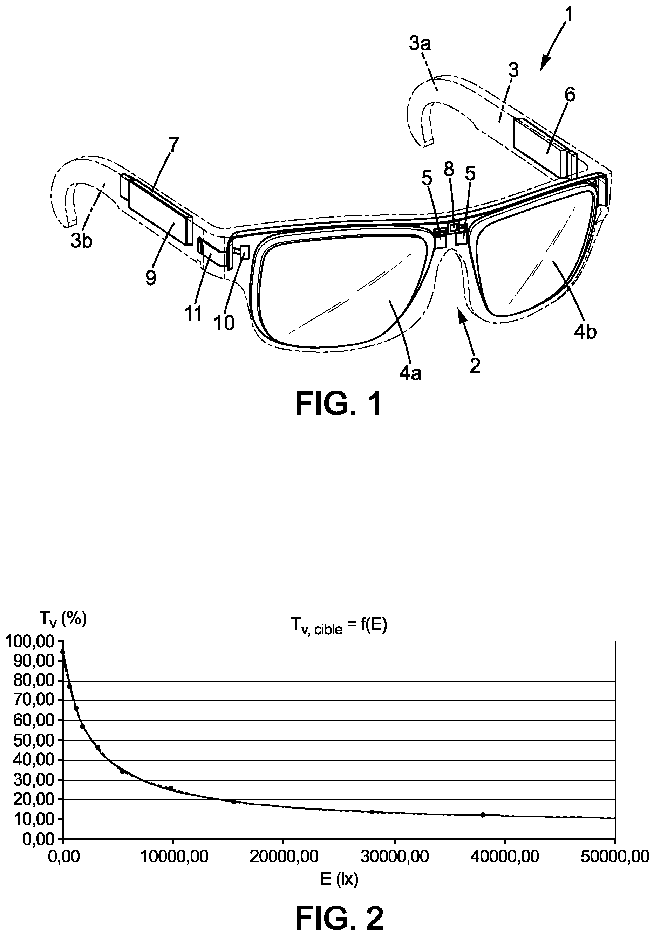

La figure 1 est une vue schématique d'un système 1 comprenant un dispositif à transmission variable 2. En particulier, comme représenté sur cette figure 1, le système 1 comprend une monture 3, ayant notamment deux branches 3a, 3b. Selon la réalisation de la figure 1, le dispositif 2 comprend deux verres à transmission variable 4a, 4b montés dans la monture 3.

Selon une réalisation, le système 1 est un système ophtalmique, et les verres à transmission variable 4a, 4b sont de préférence des lentilles ophtalmiques respectant une prescription ophtalmique d'un porteur du système 1.

Selon une réalisation, un verre 4 est de préférence un verre électrochrome. Un verre électrochrome 4, tel que connu en soi, a une structure comportant deux couches extérieures transparentes, par exemple deux plaques de verre organique ou minéral, sur lesquelles des revêtements électroconducteurs sont déposées sur leurs faces internes. Une composition électrochrome remplie une cavité formée entre les deux revêtements électroconducteurs. Il est ainsi possible de faire varier la valeur de transmission à la lumière du verre par réaction d'oxydo-réduction de la composition électrochrome en appliquant un courant électrique aux revêtements électroconducteurs.

Toutefois, l'invention n'est pas limitée au verre électrochrome et peut également concerner d'autres types de verres à transmission variable, tels que des verres à cristaux liquides (« *liquid crystal display* - LCD ») par exemple.

Le verre 4 est adapté pour fonctionner par palier de transmission. Plus précisément, le verre 4 peut être commandé selon une pluralité de valeurs de consigne de transmission Tv, avantageusement discrètes. Etant donné qu'un verre 4, notamment électrochrome, consomme davantage lorsque la transmission du verre varie, un tel fonctionnement par palier de transmission permet en particulier de minimiser la consommation électrique du dispositif 2.

Dans la suite, la transmission du verre 4 est donnée en pourcentage, 1 ou 100% correspondant à la transmission maximale que peut prendre le verre 4, et 0 ou 0% à une transmission nulle du verre 4. La définition de la transmission du verre 4 est donnée notamment par la formule ci-dessous, où SD65(λ) est la répartition spectrale de l'illuminant D65, T(λ) est la courbe de transmission spectrale du verre et V(λ) est la courbe d'efficacité lumineuse relative spectrale de l'oeil humain :

$$\tau_v = \frac{\int S_{D65}(\lambda)V(\lambda)T(\lambda)d\lambda}{\int S_{D65}(\lambda)V(\lambda)d\lambda}$$

Le dispositif 2 comprend également au moins un circuit de commande 5 relié, notamment électriquement, au verre 4. Selon la réalisation représentée par la figure 1 dans lequel le système 1 comprend deux verres à transmission variable 4a, 4b, le dispositif 2 comprend un circuit de commande 5a, 5b pour chaque verre 4a, 4b.

Le circuit de commande 5 et le verre 4 sont également reliés à une source électrique, notamment à une batterie 6, par exemple montée dans une branche 3a de la monture 3 comme représenté sur la figure 1.

Selon la réalisation représenté par la figure 1 dans lequel le système 1 comprend deux verres à transmission variable 4a, 4b, le dispositif 2 peut en outre comprendre un élément de pilotage 7, par exemple une carte mère, qui réalise la commande et transmet les valeurs de consigne de transmission Tv des deux verres 4a, 4b du système 1. L'élément de pilotage 7 permet de plus d'équilibrer le poids de la batterie en étant positionnée sur une branche différente de la batterie 6.

Le circuit de commande 5 comprend au moins un capteur d'éclairement 8. En variante, le capteur 8 peut être un élément séparé du circuit de commande 5. Le capteur 8 est adapté pour mesurer l'éclairement ambiant E arrivant sur le dispositif 2. Par « ambiant », on entend l'éclairement dans lequel se trouve le dispositif 2. L'éclairement ambiant varie donc en fonction de conditions extérieures au dispositif 2, tels que les conditions météorologiques lorsque le dispositif 2 se trouve en extérieur, ou de l'éclairage d'une pièce lorsque le dispositif 2 se trouve en intérieur par exemple.

Le capteur 8 est plus particulièrement intégré à la monture 3 du système 1, notamment au niveau du pont nasal de la monture 3 comme représenté sur la figure 1. Selon une réalisation, le capteur 8 est placé en retrait sur la monture 2, notamment pour des raisons de contraintes mécaniques et de protection du capteur 8 contre les intempéries. Toutefois, selon cette réalisation, le capteur 8 ne mesure pas nécessairement tout l'éclairement E arrivant sur le dispositif 2 du fait de son positionnement en retrait. On peut alors corriger les valeurs d'éclairement E mesurées par le capteur 8 par étalonnage pour compenser le positionnement en retrait du capteur 8. En revanche, la mise en retrait de ce capteur 8 pourrait permettre de limiter le champ perçu par le capteur 8, par exemple pour se rapprocher du champ visuel perçu par un porteur standard du dispositif 2.

Le capteur 8 peut également être associé à un élément optique, tel qu'un filtre ou un diffuseur d'éclairement placé en regard du capteur 8, ou bien une lentille convergente ou divergente.

Le capteur 8 est de préférence un micro capteur d'éclairement (également appelé « Ambient Light Sensor - ALS »). Plus précisément, un capteur 8 utilisé selon l'invention peut par exemple être commercialisé sous le nom Maxim MAX44009 de la marque Maxim integrated®. Le capteur 8 peut ainsi mesurer l'éclairement reçu par unité de surface (en lux ou en W.m$^{-2}$). En variante, le capteur 8 peut également mesurer d'autres valeurs d'éclairement, telle qu'une intensité ou une luminance visuelle ou photométrique. Le capteur 8 peut par exemple mesurer l'éclairement dans le visible et/ou dans l'ultraviolet.

Afin de s'assurer de la fiabilité de la mesure de l'éclairement E, le dispositif 2 peut en outre comprendre une pluralité de capteurs 8, notamment deux capteurs 8. Dans le cas où les capteurs 8 mesurent des valeurs d'éclairement E différentes, le circuit de commande 5 prend alors en compte par exemple uniquement la valeur de l'éclairement E mesurée la plus élevée ou la valeur du capteur 8 qui ne mesure pas de variation de l'éclairement. Ainsi, même si un capteur 8 est défaillant ou si une mesure n'est pas exploitable (en cas d'une mèche de cheveux devant le capteur 8 par exemple), l'autre capteur 8 peut fournir une mesure de l'éclairement E exploitable.

Le capteur 8 selon l'invention fonctionne par palier de détection de l'éclairement. A cet effet, le capteur 8 comprend une mémoire de stockage. Le capteur 8 stocke en mémoire au moins une valeur d'éclairement minimale Emin,hyst et une valeur d'éclairement maximale Emax,hyst. Ces valeurs d'éclairement minimale et maximale [Emin, Emax]hyst définissent entre elles un palier de détection. Pour la valeur minimale du premier palier, c'est-à-dire du palier correspondant aux valeurs d'éclairement les moins élevées, on peut ne pas stocker de valeur, cette valeur étant alors par défaut 0.

Pour la valeur maximale du dernier palier, c'est-à-dire du palier correspondant aux valeurs d'éclairement les plus élevées, de même, on peut ne pas stocker de valeur, cette valeur étant alors par défaut infinie.

En fonction de l'éclairement mesuré E et des valeurs minimale et maximale [Emin, Emax]hyst d'un palier de détection, le capteur 8 est adapté pour se trouver alternativement dans un état inactif ou dans un état actif.

Dans l'état inactif, le capteur 8 est en veille, et a en particulier une consommation électrique minimale. Dans l'état inactif, le capteur 8 mesure, par exemple à l'aide d'un processeur intégré, l'éclairement ambiant E. Le capteur 8 mesure notamment l'éclairement ambiant E de façon périodique selon une période Tmes. La période Tmes peut être comprise entre 0 et 1 secondes, voire entre 100 millisecondes et 800 millisecondes. La période Tmes peut également être égale à environ 6,25 millisecondes.

Le capteur 8 reste dans l'état inactif tant que l'éclairement mesuré E n'est pas inférieur à la valeur d'éclairement minimale Emin,hyst ou supérieur à la valeur d'éclairement maximale Emax,hyst du palier de détection pendant une durée supérieure à un temps de déclenchement Δt déterminé. Le temps de déclenchement Δt est de préférence choisi pour être compris entre 1 seconde et 2 secondes, voire entre 0,1 seconde et 2 secondes. De préférence, le temps de déclenchement Δt est de préférence égal à 1,6 secondes. Le temps de déclenchement Δt est en particulier choisi de façon à ne pas entraîner de variation trop fréquente de la transmission du verre 4.

Lorsque le capteur 8 mesure une valeur d'éclairement courante E inférieure à la valeur d'éclairement minimale Emin,hyst ou supérieure à la valeur d'éclairement maximale Emax,hyst du palier de détection pendant une durée supérieure au temps de déclenchement Δt, le capteur 8 passe de l'état inactif à l'état actif. Dans l'état actif, le capteur 8 transmet alors la valeur d'éclairement courante E, notamment la dernière valeur d'éclairement mesurée E, au circuit de commande 5.

Selon une réalisation, le capteur 8 peut déterminer et faire varier automatiquement la période de mesure Tmes et/ou le temps de déclenchement Δt afin de minimiser sa consommation électrique.

Le fonctionnement du capteur 8 par palier de détection permet de minimiser la consommation électrique du dispositif 2, étant donné que le capteur 8 consomme davantage d'énergie électrique dans l'état actif que dans l'état inactif, et en particulier lorsqu'il transmet une valeur d'éclairement E au circuit de commande 5, et notamment à l'élément de pilotage 7. En outre, un fonctionnement du capteur 8 par palier de détection permet également d'éviter que le circuit de commande 5 interroge le capteur 8 en permanence pour obtenir la valeur d'éclairement E ambiante. Le circuit de commande 5 étant plus énergivore électriquement que le capteur 8, la consommation énergétique globale du dispositif 2 serait alors supérieure.

Le circuit de commande 5 est adapté pour commander une valeur de consigne de transmission Tv du verre 4 en fonction de la valeur d'éclairement E transmis par le capteur 8. En particulier, le circuit de commande 5 définit selon l'invention une pluralité de paliers de fonctionnement P successifs d'éclairement. On associe notamment à chaque palier de fonctionnement du circuit de commande 5 un palier de détection du capteur 8. Par « successif », on entend que la valeur maximale Emax d'un palier de fonctionnement P0 correspond à la valeur minimale Emin d'un palier de fonctionnement suivant P1, et notamment d'un palier supérieur. A cet effet, le circuit de commande 5 ou l'élément de pilotage 7 comprend une mémoire de stockage. Le circuit de commande 5 ou l'élément de pilotage 7 stocke en mémoire au moins deux valeurs d'éclairement minimales Emin et deux valeurs d'éclairement maximales Emax, chaque couple de valeurs d'éclairement minimale et maximale définissant entre elles un palier de fonctionnement. A chaque palier de fonctionnement d'éclairement P correspond une valeur de consigne de transmission Tv du verre 4.

On entend ici par valeur de consigne de transmission Tv, les valeurs à atteindre quand la transmission du verre 4 est dans un état stable, la valeur de transmission du verre 4 pouvant en effet varier de façon continue lors de la transition entre deux états stables, sur une durée limitée.

Le circuit de commande 5 est ainsi adapté pour commander le passage de la transmission du verre 4 entre deux valeurs de consigne de transmission Tv correspondant à deux paliers de fonctionnement différents. La variation entre deux valeurs de consigne de transmission Tv successive du verre 4 est de préférence discontinue.

Le circuit de commande 5 définit au moins trois paliers de fonctionnement P, auxquels sont associés trois valeurs de consigne de transmission du verre Tv. Toutefois, le circuit de commande 5 peut définir plus de trois paliers de fonctionnement P, et en particulier quatre paliers de fonctionnement P.

De façon générale, un dispositif 2 comportant un plus grand nombre de palier de fonctionnement P consommera davantage d'énergie électrique étant donné que la variation de la transmission du verre 4 est susceptible d'être plus fréquente. En contrepartie, un dispositif 2 comportant un plus grand nombre de palier de fonctionnement P permet d'obtenir une variation plus rapide de la valeur transmission du verre 4 étant donné que la variation entre deux valeurs de consigne de transmission successives Tv du verre 4 est susceptible d'être moins élevée. La variation entre deux valeurs de consigne de transmission successives du verre 4 est en particulier de préférence comprise entre 0.06 et 06, voire entre 0,1 et 0,6.

Les paliers de fonctionnement P et les valeurs de consigne de transmission Tv du verre 4 sont plus particulièrement choisis afin de rapprocher la variation de la transmission du verre 4 d'une fonction cible Tv,cible = f(E).

Selon une réalisation, la fonction cible Tv,cible correspond aux valeurs de transmission d'un verre photochromique, notamment d'un verre photochromique instantané. Par verre photochromique instantané, on entend notamment un verre fictif qui aurait les mêmes propriétés de transmission qu'un verre photochromique mais dont la réaction en transmission serait immédiate.

En particulier, il est possible, à partir de mesure d'un verre photochromique sensible à des variations d'un éclairement ultraviolet, de définir une courbe de transmission en fonction d'un éclairemen dans le domaine visible par extrapolation, à partir, par exemple, d'un spectre solaire de référence, ici le spectre de référence ASTM G173-03 (Global Tilt). La figure 2 représente notamment une telle fonction cible Tv,cible correspondant à un verre photochromique instantané transitions 7 dont la transmission a été mesurée à l'aide d'un banc de mesures photochromiques (BMP).

Toutefois, d'autres fonctions cible Tv,cible peuvent être utilisées selon l'invention. Par exemple, la fonction Tv,cible peut être une fonction personnalisée en fonction du porteur du dispositif 2. La fonction Tv,cible peut en particulier être déterminée en fonction des préférences du porteur lors d'une phase de test initiale du dispositif 2.

Selon une autre variante, la fonction Tv,cible peut également être adaptée en fonction de données physiologiques du porteur. Par exemple, la fonction Tv,cible peut prendre en compte l'âge du porteur, son diamètre pupillaire, l'activité de ses paupières, d'éventuelles pathologies oculaires (début de cataracte par exemple, photophobies par exemple), ou l'activité du porteur (lecture, sport), sans que cette liste soit limitative.

Les paliers de fonctionnement P et les valeurs de consigne de transmission Tv du verre 4 sont également choisis afin de prendre en compte l'environnement lumineux du dispositif 2. En particulier, il est possible de définir le nombre de paliers de fonctionnement P, les valeurs minimales et maximales Emin, Emax des paliers de fonctionnement P et les valeurs de consigne de transmission Tv associées, en fonction d'une situation spécifique d'éclairement dans laquelle le porteur est susceptible de se trouver.

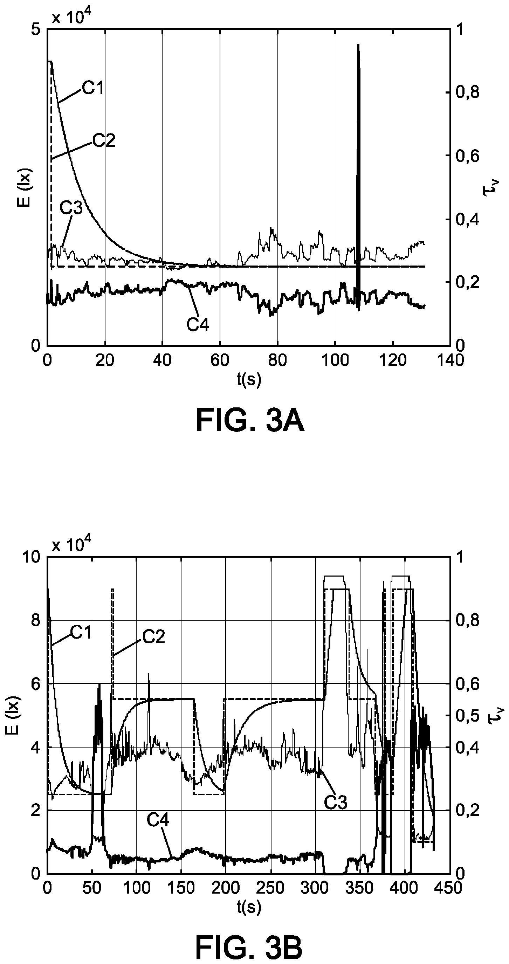

A titre d'exemple, les courbes C4 des figures 3A et 3B représentent des situations d'éclairement correspondant à des scènes de vie quotidienne courante différentes mesurées au moyen du capteur 8 placé au niveau du pont nasal de la monture 3 comme représenté sur la figure 1. Le système 1 est alors placé verticalement, c'est-à-dire que la surface active du capteur 8 est perpendiculaire au sol sur lequel se trouve le porteur.

Plus précisément, la courbe C4 de la figure 3A représente une mesure d'éclairement par beau temps avec le soleil dans le dos ou de côté. La courbe C4 de la figure 3B représente une mesure d'éclairement, par beau temps nuageux avec percées de soleil et traversées de tunnels.

Dans ces situations d'éclairement, et notamment dans celles des figures 3A et 3B, il est possible d'optimiser les valeurs de chacun des paliers de fonctionnement P, notamment la valeur minimale Emin la valeur maximale Emax et/ou les valeurs de consigne de transmission Tv correspondant à chaque palier P.

A cet effet, on peut par exemple définir une fonction de mérite permettant de déterminer ces valeurs. La fonction de mérite peut dépendre de certains critères, qui sont par exemple le nombre moyen de variation de valeurs de consigne de transmission Tv du verre 4 dans un temps déterminé.

Les valeurs de chacun des paliers de fonctionnement P ainsi que leur nombre peuvent également dépendre de l'état de la batterie 6. Le circuit de commande 5 définit un grand nombre de paliers de fonctionnement lorsque la batterie 6 du dispositif 2 est complètement chargée. Lorsque la batterie 6 se décharge, le circuit de commande 5 définit alors un nombre de paliers de fonctionnement moins élevé pour diminuer la consommation électrique du dispositif 2. Le circuit de commande 5 peut alors définir uniquement deux paliers de fonctionnement, et donc permettre une seule transition entre ces deux paliers.

Selon une autre réalisation, la fonction de mérite peut également dépendre de l'écart moyen entre la valeur de consigne de transmission Tv du verre 4 et la transmission cible donnée par fonction cible Tv,cible précédemment déterminée.

Les critères de la fonction de mérite peut être déterminés selon des situations d'éclairement de la vie courante, tele que celles représentées sur les figures 3A et 3B.

Ainsi, sur les figure 3A et 3B, la courbe C4 représente l'éclairement ambiant du dispositif 2. La courbe C3 représente la valeur de transmission cible de la fonction cible Tv,cible. La courbe C2 représente les valeurs de consigne de transmission Tv du verre 4 commandé par le circuit de commande 5 du dispositif 2. Enfin, la courbe C1 représente la valeur de transmission réelle du verre 4 du fait du temps de réponse du verre 4 à la commande du circuit de commande 5. En particulier, le temps de réponse du verre 4 permet d'éviter des transitions trop brutales de transmission, ce qui permet d'assurer davantage de confort visuel au porteur.

Selon une réalisation, la fonction de mérite vise en particulier à minimiser l'écart entre la courbe C3 et la courbe C1, c'est-à-dire l'écart entre la valeur de transmission de la fonction cible Tv,cible et la valeur de transmission réelle du verre 4.

On donne ci-après des exemples de valeurs d'éclairement minimale Emin et de valeurs d'éclairement maximale Emax de paliers de fonctionnement P associés à des valeurs de consigne de transmission Tv du verre 4.

Selon un premier exemple, le dispositif 2 se trouve dans une situation d'éclairement correspondant à des conditions extérieures d'éclairement, susceptibles de varier significativement. La transmission du verre 4 est donc également susceptible de varier de façon significative, en particulier entre 0,1 et 0,9.

Selon ce premier exemple, le circuit de commande définit par exemple quatre paliers de fonctionnement, de sorte que :

- [Emin, Emax] = [0 ; 2000 lx] ; on associe à ce palier la valeur de consigne en transmission Tv = 0.9. Ceci correspond à un éclairement mesuré en intérieur et/ou extérieur par mauvais temps, la transmission du verre à transmission variable est alors élevée ;
- [Emin, Emax] = [2000 lx ; 6000 lx] ; on associe à ce palier la valeur de consigne en transmission Tv = 0.55. Ceci correspond à un éclairement mesuré en extérieur par temps couvert ;
- [Emin, Emax] = [6000 lx ; 20000 lx] ; on associe à ce palier la valeur de consigne en transmission Tv = 0.25. Ceci correspond à un éclairement mesuré en extérieur par temps ensoleillé ; et
- Emin, Emax] = [20000 lx ; -] ; on associe à ce palier la valeur de consigne en transmission Tv = 0.1. Ceci correspondant à un éclairement mesuré en extérieur par ciel bleu avec le soleil de face.

Selon un deuxième exemple, le dispositif 2 se trouve dans une situation d'éclairement correspondant à des conditions d'éclairement en intérieur. L'éclairement est dans cette situation est susceptible de varier moins fortement. Il est alors possible de définir un nombre restreint de paliers de fonctionnement P et de valeurs de consigne de transmission Tv du verre 4.

Selon ce deuxième exemple, le circuit de commande 5 définit par exemple trois paliers de fonctionnement d'éclairement davantage rapprochés les uns des autres que dans le premier exemple décrit précédemment, de sorte que :

- [Emin, Emax] = [0 lx ; 500 lx], alors Tv = 0.9.
- [Emin, Emax] = [500 lx ; 1000 lx], alors Tv = 0.75.
- [Emin, Emax] = [1000 lx ; 2000 lx], alors Tv = 0.55.

Selon une réalisation, chacune des valeurs de consigne de transmission Tv du verre 4 est choisie pour être comprise dans l'un des intervalles suivants :

- entre 0,80 et 1 (catégorie 0) ;
- entre 0,43 et 0,80 (catégorie 1) ;
- entre 0,18 et 0,43 (catégorie 2) ; et
- entre 0,08 et 0,18 (catégorie 3).

Ces intervalles, ou catégories numérotées de 0 à 3, correspondent à celles définies par la norme 8980-3 (« Optique ophtalmique - Verres de lunettes finis non détourés - Partie 3 : spécifications relatives au facteur de transmission et méthodes d'essai »). Les valeurs de consigne de transmission Tv du verre 4 sont avantageusement respectivement comprises dans des intervalles différents.

Avantageusement, on choisit une valeur de consigne de transmission Tv du verre 4 la plus élevée possible dans un intervalle donné. En effet, la commande de la valeur de consigne de transmission Tv dans un intervalle supérieur consomme davantage que la commande de la valeur de consigne de transmission Tv dans un intervalle inférieur. Par exemple, une transmission du verre 4 dans la catégorie 3 consomme de l'ordre de 1,5 fois plus de courant électrique qu'une transmission du verre 4 dans la catégorie 2.

On décrit ci-après le procédé de commande de la transmission d'un verre 4 du dispositif 2 selon l'invention.

Selon une réalisation, les paliers d'élciarement P du capteur 8 fonctionnent suivant des cycles d'hystérésis. Selon cette réalisation de fonctionnement selon des cycles d'hystérésis, le circuit de commande 5 définit des valeurs minimales et maximale secondaire [Emin, Emax] différentes des valeurs minimales et maximales des paliers de détection [Emin, Emax]hyst du capteur 8. Dans la suite, on considère donc que les valeurs minimales et maximale secondaires correspondent aux valeurs minimale et maximale d'un palier de fonctionnement P du circuit de commande 5. La valeur minimale d'un palier courant $E_{min,hyst,P0}$, que stocke le capteur 8, est inférieure ou égale à la valeur minimale secondaire $E_{min,P0}$ de ce palier courant P0. La valeur maximale d'un palier courant, $E_{max,hyst,P0}$, que stocke le capteur 8, est supérieure ou égale à la valeur maximale secondaire $E_{max,P0}$ de ce palier courant P0.

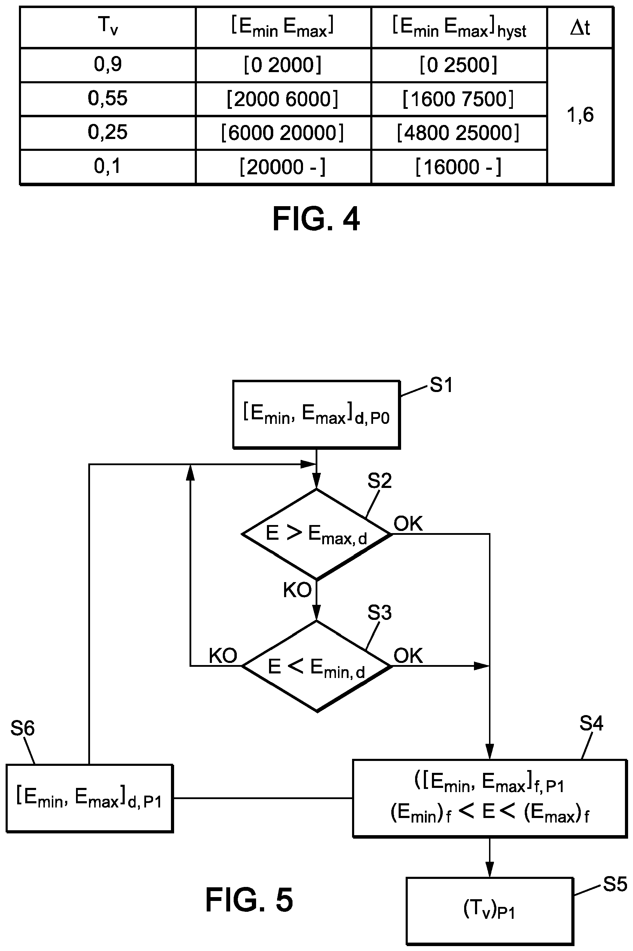

La deuxième colonne du tableau de la figure 4 indique en particulier un exemple de valeurs d'éclairement minimale et maximale [Emin, Emax] stockée par le circuit de commande 5 pour les différents paliers de fonctionnement P. La troisième colonne du tableau de la figure 4 indique en particulier un exemple de valeurs d'éclairement minimale et maximale [Emin, Emax]hyst du capteur 8 pour les différents paliers de détection. Ainsi, chaque ligne du tableau de la figure 4 correspond plus précisément à un palier, auquel on associe un palier de fonctionnement du circuit de commande 5 et un palier de détection du capteur 8.

Dans une étape S1, le verre 4 a une valeur de consigne de transmission initiale courante $Tv,P0$ correspondant à un palier d'éclairement courant P0. Le capteur 8 est initialement dans un état inactif, en veille. Le capteur 8 stocke en mémoire au moins les valeurs d'éclairement minimale et maximale $[E_{min}, E_{max}]_{hyst,P0}$ du palier de détection courant P0 correspondant à la consigne de transmission courante $Tv,P0$ du verre 4.

Comme représenté sur la figure 5 par les étapes S2 et S3, le capteur 8 reste à l'état inactif tant que l'éclairement E mesuré n'est pas supérieur à la valeur d'éclairement maximale Emax,hyst (étape S2) ou inférieur à la valeur d'éclairement minimale Emin,hyst (étape S3) du palier de détection courant P0 pendant une durée supérieure au temps de déclenchement Δt.

Lorsque le capteur 8 mesure une valeur d'éclairement courante E inférieure à la valeur d'éclairement minimale Emin,hyst ou supérieure à la valeur d'éclairement maximale Emax,hyst du palier de détection courant P0 pendant une durée supérieure au temps de déclenchement Δt, le capteur 8 passe de l'état inactif à l'état actif. Le capteur 8 transmet alors la valeur d'éclairement courante E, notamment la dernière valeur d'éclairement mesurée E, au circuit de commande 5.

Dans une étape S4, après avoir reçu la valeur d'éclairement courante E mesurée par le capteur 8, le circuit de commande 5 détermine un nouveau palier de fonctionnement courant P1 dans lequel se trouve la valeur d'éclairement mesurée E, en particulier tel que Emin,P1 < E < Emax,P1. Dans une étape S5, le circuit de commande 5 commande alors automatiquement la valeur de consigne de transmission Tv,P1 du verre 4 correspondant au nouveau palier de fonctionnement courant P1.

Dans une étape S6, après avoir commandé une nouvelle valeur de consigne de transmission Tv,P1 du verre 4 correspondant à un nouveau palier courant P1, le circuit de commande 5 transmet au capteur 8 les valeurs d'éclairement minimale et maximale [Emin, Emax]hyst,P1 du nouveau palier de détection courant P1, pour un stockage en mémoire du capteur 8.

Après avoir reçu la valeur d'éclairement minimale Emin,hyst et la valeur d'éclairement maximale Emax,hyst du nouveau palier de détection courant P1, le capteur 8 passe de l'état actif à l'état inactif. Le procédé de commande de la transmission est alors réitéré à partir de l'étape S2.

Le fonctionnement selon des cycles d'hystérésis permet en particulier d'éviter des phénomènes de « clignotement » du verre 4 qui sont susceptibles d'apparaitre lors de changement trop rapide des valeurs de consigne de transmission Tv du verre 4. En particulier, un tel phénomène se produit lorsque l'éclairement E mesuré par le capteur 8 varie au voisinage d'une valeur correspondant à la valeur d'éclairement maximale Emax,hyst,P0 d'un palier de détection P0 et à la valeur minimale Emin,hyst,P1 d'un palier de détection suivant P1. Ceci peut se révéler particulièrement gênant pour un porteur du dispositif 2.

Toutefois, selon une autre réalisation, le fonctionnement du dispositif 2 peut également fonctionner sans hystérésis. Selon cette réalisation, les paliers de détection du capteur 8 correspondent au palier de fonctionnement P du circuit de commande 5. Autrement dit, les valeurs minimales et maximales [Emin, Emax]hyst de chaque palier de détection du capteur 8 correspondent respectivement aux valeurs minimales et maximales [Emin, Emax] de chaque palier de fonctionnement P du circuit de commande 5 associé.

Selon une autre réalisation, afin de simplifier le fonctionnement du dispositif 2, il est possible de n'utiliser que les paliers de détection [Emin, Emax]hyst du capteur 8. Selon cette réalisation, les étapes S1 et S3 restent identiques au procédé décrit ci-dessus.

Dans l'étape S4, le circuit de commande 5 détermine le palier de détection P1 différent de P0 tel que la valeur d'éclairement E soit supérieure à la valeur minimale Emin,hyst,P1 du palier de détection P1, et tel que la valeur minimale Emin,hyst,P2 du palier de détection suivant soit supérieure à la valeur d'éclairement E mesurée. En variante, d'autres méthodes de détermination du nouveau palier sont possibles lors de l'étape S4. Par exemple, le circuit de commande 5 détermine le palier de détection P1 différent de P0 tel que la valeur d'éclairement E soit inférieure à la valeur maximale Emax,hyst,P1 du palier de détection P1.

Dans l'étape S5, le circuit de commande 5 commande alors la valeur de consigne de transmission Tv,P1 du verre 4 correspondant au nouveau palier courant P1.

Selon une réalisation telle que représentée sur la figure 1, le dispositif 2 comprend un organe de réglage 9. L'organe de réglage 9 est adapté pour permettre à un porteur du dispositif 2 de modifier les valeurs de consigne de transmission et/ou les valeurs minimales et/ou les valeurs maximales des paliers d'éclairement P.

L'organe de réglage 9 peut être un capteur capacitif, par exemple placé sur le côté de la monture 3, notamment sur l'une des branches 3a, 3b.

Le porteur peut ainsi modifier les paramètres du dispositif 2 manuellement, par exemple en glissant le doigt le long de l'organe de réglage 9. A titre d'exemple, le porteur peut changer la valeur de consigne de transmission Tv des verres 4a, 4b en commandant l'organe de réglage 9, par exemple en effectuant un mouvement devant ou en effectuant un appui long sur l'organe de réglage 9.

Selon une réalisation, l'organe de réglage 9 peut également permettre au porteur de consulter l'état de la batterie du dispositif 2.

Selon une réalisation, le dispositif comprend un organe de visualisation 10 visible du porteur, par exemple une diode électroluminescente (DEL). L'organe de visualisation 10 peut être adapté pour informer le porteur de ses interactions avec le dispositif 2. L'organe de visualisation 10 peut également être adapté pour informer le porteur d'un dysfonctionnement du dispositif 2, notamment lorsque la batterie 6 du dispositif 2 est déchargée ou si le capteur 8 est défectueux.

Selon une réalisation, le dispositif 2 comprend un capteur de transmission (non représenté sur les figures) permettant de mesurer en temps réel la valeur de transmission du verre 4. Il est alors possible d'effectuer l'asservissement de la valeur de consigne de transmission Tv du verre 4 en boucle fermée, et non uniquement en boucle ouverte.

Selon une réalisation, le dispositif 2 comprend également un élément de détection de fermeture 11 tel que représenté sur la figure 1. En particulier, l'élément de détection de fermeture 11 est adapté pour faire passer le dispositif 2 à l'état inactif, c'est-à-dire en veille avec une consommation électrique minimale, quand au moins l'une des branches 3b de la monture 3 est refermée. Un tel élément de détection de fermeture 11 peut par exemple être à effet magnéto-résistif associé à un aimant pour détecter l'ouverture ou la fermeture de la branche 3b.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

## Revendications

1. Système ophtalmique comprenant un dispositif à transmission variable (2) comportant au moins :

   - une batterie,
   - un verre à transmission variable (4) et
   - un circuit de commande (5) comprenant au moins un capteur (8) adapté pour mesurer un éclairement (E) ambiant de façon périodique, le circuit de commande (5) étant adapté pour commander automatiquement la valeur de transmission du verre à transmission variable (4) en fonction de l'éclairement (E) mesuré par le capteur (8),

   dans lequel le circuit de commande est adapté pour :

   - définir au moins trois paliers successifs d'éclairements (P), chaque palier d'éclairement (P) étant délimité par une valeur d'éclairement minimale (Emin) et une valeur d'éclairement maximale (Emax), et étant associé une valeur de consigne de transmission du verre,
   - déterminer le palier de fonctionnement dans lequel se trouve la valeur d'éclairement mesurée et commander alors automatiquement la valeur de consigne de transmission du verre correspondant au palier de fonctionnement déterminé,

   le circuit de commande étant adapté pour utiliser une fonction de mérite dépendant d'une pluralité de critères pour définir les paliers successifs d'éclairement de façon à définir un grand nombre de paliers de fonctionnement lorsque la batterie est complètement chargée et un nombre de paliers de fonctionnement moins élevé lorsque la batterie se décharge afin de diminuer la consommation électrique du dispositif.

2. Système ophtalmique (2) selon la revendication précédente, dans lequel la période de mesure (Tmes) du capteur (8) étant comprise entre 5 millisecondes et 1 seconde.

3. Système ophtalmique (2) selon l'une quelconque des revendications précédentes, dans lequel la variation entre deux valeurs de consigne de transmission successives (Tv) du verre (4) est comprise entre 0,05 et 0,6.

4. Système ophtalmique (2) selon l'une quelconque des revendications précédentes, comprenant un organe de réglage (9) adapté pour permettre à un porteur du dispositif (2) de modifier les valeurs de consigne de transmission (Tv) et/ou les valeurs minimales (Emin) et/ou les valeurs maximales (Emax) des paliers d'éclairements (P).

5. Système ophtalmique (2) selon l'une quelconque des revendications précédentes, dans lequel chacune des valeurs de consigne de transmission (Tv) du verre (4) est comprise dans l'un des intervalles suivants :

   - entre 0,80 et 1 ;
   - entre 0,43 et 0,80
   - entre 0,18 et 0,43 ; et
   - entre 0,08 et 0,18.

6. Système ophtalmique (2) selon la revendication précédente, dans lequel les valeurs de consigne de transmission (Tv) du verre (4) sont respectivement comprises dans des intervalles différents.

7. Système ophtalmique (2) selon l'une quelconque des revendications précédentes, dans lequel le circuit de commande (5) comprend une mémoire de stockage des valeurs d'éclairements minimale et maximale (Emin, Emax) des paliers d'éclairements (P).

8. Système selon l'une quelconque des revendications 1 à 7, dans lequel le verre est un verre photochromique, et lesdits valeurs de consigne de transmission (Tv) du verre (4) en fonction de l'éclairement correspondent à des valeurs de transmission dudit verre photochromique.

9. Procédé de commande de la transmission d'un verre à transmission variable (4) d'un dispositif à transmission variable (2) d'un système ophtalmique, ledit dispositif de transmission variable comprenant une batterie et un circuit de commande (5) comportant au moins un capteur (8) adapté pour mesurer un éclairement (E) ambiant de façon périodique, le circuit de commande (5) étant adapté pour commander automatiquement la valeur de transmission du verre à transmission variable (4) en fonction de l'éclairement (E) ambiant mesuré par le capteur (8), le procédé comportant les étapes mises en oeuvre par le circuit de commande (5) :

- définir au moins trois paliers successifs d'éclairements (P), chaque palier d'éclairement (P) étant délimité par une valeur d'éclairement minimale (Emin) et une valeur d'éclairement maximale (Emax), et étant associé une valeur de consigne de transmission du verre,
- déterminer le palier de fonctionnement dans lequel se trouve la valeur d'éclairement mesurée et commander alors automatiquement la valeur de consigne de transmission du verre correspondant au palier de fonctionnement déterminé,

dans lequel une fonction de mérite est utilisée pour définir les paliers successifs d'éclairement, ladite fonction de mérite dépendant d'une pluralité de critères pour définir les paliers successifs d'éclairement de façon à définir un grand nombre de paliers de fonctionnement lorsque la batterie est complètement chargée et un nombre de paliers de fonctionnement moins élevé lorsque la batterie se décharge afin de diminuer la consommation électrique du dispositif.

10. Procédé selon la revendication 9, comprenant en outre les étapes :

- le capteur (8) stocke en mémoire au moins la valeur d'éclairement minimale (Emin,hyst) et la valeur d'éclairement maximale (Emax,hyst) d'un palier courant (P0) correspondant à une transmission courante du verre à transmission variable (4), et
- la prise en compte par le circuit de commande (5) d'une valeur d'éclairement ambiant courante (E), mesurée par le capteur (8), est conditionnée au cas où le capteur (8) mesure une valeur d'éclairement courante (E) inférieure à la valeur d'éclairement minimale (Emin,hyst) ou supérieure à la valeur d'éclairement maximale (Emax,hyst) du palier courant (P0) pendant une durée supérieure à un temps de déclenchement (Δt).

11. Procédé de commande selon la revendication précédente, dans lequel :

- après avoir reçu la valeur d'éclairement ambiant courante (E) mesurée par le capteur, le circuit de commande (5) détermine un nouveau palier courant (P1) dans lequel se trouve la valeur de l'éclairement ambiant mesurée (E), et
- commande automatiquement la valeur de consigne de transmission du verre (4) correspondant au nouveau palier courant (P1).

12. Procédé de commande selon la revendication 10, dans lequel :

- le circuit de commande (5) définit en outre pour chaque palier (P), une valeur minimale secondaire (Emin) et une valeur maximale secondaire (Emax), la valeur minimale (Emin,hyst) d'un palier courant (P0), que stocke le capteur (8), étant inférieure ou égale à la valeur minimale secondaire (Emin) de ce palier courant (P0), et la valeur maximale (Emin,hyst) d'un palier courant (P0), que stocke le capteur (8), étant supérieure ou égale à la valeur maximale secondaire (Emax) de ce palier courant (P0),
- après avoir reçu la valeur de l'éclairement ambiant courante (E) mesurée par le capteur (8), le circuit de commande (5) détermine un nouveau palier courant (P1) dans lequel la valeur de l'éclairement ambiant mesurée (E) se trouve comprise entre la valeur minimale secondaire (Emin) et la valeur maximale secondaire (Emax) du nouveau palier courant (P1) et,
- commande automatiquement la valeur de consigne de transmission (Tv) du verre (4) correspondant au nouveau palier courant (P1).

13. Procédé selon l'une des revendications 11 et 12, dans lequel, après avoir commandé une nouvelle valeur de de consigne de transmission (Tv) du verre (4) correspondant à un nouveau palier courant (P1), le circuit de commande (5) transmet au capteur (8) la valeur de l'éclairement minimale (Emin,hyst) et la valeur de l'éclairement maximale (Emax,hyst) du nouveau palier courant (P1), pour un stockage en mémoire du capteur (8).

**Patentansprüche**

1. 1. Ophthalmisches System, das eine Vorrichtung mit variabler Transmission (2) enthält, die mindestens aufweist:

- eine Batterie,
- ein Glas mit variabler Transmission (4) und
- eine Steuerschaltung (5), die mindestens einen Sensor (8) enthält, der geeignet ist, periodisch eine Umgebungsbeleuchtungsstärke (E) zu messen, wobei die Steuerschaltung (5) geeignet ist, den Transmissionswert des Glases mit variabler Transmission (4) abhängig von der vom Sensor (8) gemessenen Beleuchtungsstärke (E) automatisch zu steuern,

wobei die Steuerschaltung geeignet ist, um:

- mindestens drei aufeinanderfolgende Beleuchtungsstärkestufen (P) zu definieren, wobei jede Beleuchtungsstärkestufe (P) von einem minimalen Beleuchtungsstärkewert (Emin) und einem maximalen Beleuchtungsstärkewert (Emax) begrenzt wird und einem Transmissionssollwert des Glases zugeordnet ist,
- die Betriebsstufe zu bestimmen, in der sich der gemessene Beleuchtungsstärkewert befindet, und dann automatisch den entsprechenden Transmissionssollwert des Glases auf die bestimmte Betriebsstufe zu steuern,

wobei die Steuerschaltung geeignet ist, eine von einer Vielzahl von Kriterien abhängende Gütefunktion zu verwenden, um die aufeinanderfolgenden Beleuchtungsstärkestufen zu definieren, um eine große Anzahl von Betriebsstufen, wenn die Batterie vollständig geladen ist, und eine weniger große Anzahl von Betriebsstufen zu definieren, wenn die Batterie sich entlädt, um den Stromverbrauch der Vorrichtung zu verringern.

2. Ophthalmisches System (2) nach dem vorhergehenden Anspruch, wobei die Messperiode (Tmes) des Sensors (8) zwischen 5 Millisekunden und 1 Sekunde liegt.

3. Ophthalmisches System (2) nach einem der vorhergehenden Ansprüche, wobei die Variation zwischen zwei aufeinanderfolgenden Transmissionssollwerten (Tv) des Glases (4) zwischen 0,05 und 0,6 liegt.

4. Ophthalmisches System (2) nach einem der vorhergehenden Ansprüche, das ein Einstellorgan (9) enthält, das geeignet ist, einem Träger der Vorrichtung (2) zu erlauben, die Transmissionssollwerte (Tv) und/oder die minimalen Werte (Emin) und/oder die maximalen Werte (Emax) der Beleuchtungsstärkestufen (P) zu ändern.

5. Ophthalmisches System (2) nach einem der vorhergehenden Ansprüche, wobei jeder der Transmissionssollwerte (Tv) des Glases (4) in einem der folgenden Intervalle liegt:

- zwischen 0,80 und 1;
- zwischen 0,43 und 0,80;
- zwischen 0,18 und 0,43; und
- zwischen 0,08 und 0,18.

6. Ophthalmisches System (2) nach dem vorhergehenden Anspruch, wobei die Transmissionssollwerte (Tv) des Glases (4) in unterschiedlichen Intervallen liegen.

7. Ophthalmisches System (2) nach einem der vorhergehenden Ansprüche, wobei die Steuerschaltung (5) einen Speicher von minimalen und maximalen Beleuchtungsstärkewerten (Emin, Emax) der Beleuchtungsstärkestufen (P) enthält.

8. System nach einem der Ansprüche 1 bis 7, wobei das Glas ein photochromisches Glas ist, und die Transmissionssollwerte (Tv) des Glases (4) abhängig von der Beleuchtungsstärke Transmissionswerten des photochromischen Glases entsprechen.

9. Steuerverfahren der Transmission eines Glases mit variabler Transmission (4) einer Vorrichtung mit variabler Transmission (2) eines ophthalmischen Systems, wobei die Vorrichtung mit variabler Transmission eine Batterie und eine Steuerschaltung (5) enthält, die mindestens einen Sensor (8) aufweist, der geeignet ist, periodisch eine Umgebungsbeleuchtungsstärke (E) zu messen, wobei die Steuerschaltung (5) geeignet ist, den Transmissionswert des Glases mit variabler Transmission (4) abhängig von der vom Sensor (8) gemessenen Umgebungsbeleuchtungsstärke (E) automatisch zu steuern, wobei das Verfahren die von der Steuerschaltung (5) durchgeführten Schritte aufweist:

- Definition von mindestens drei aufeinanderfolgenden Beleuchtungsstärkestufen (P), wobei jede Beleuchtungsstärkestufe (P) von einem minimalen Beleuchtungsstärkewert (Emin) und einem maximalen Beleuchtungsstärkewert (Emax) begrenzt wird und einem Transmissionssollwert des Glases zugeordnet ist,
- Bestimmung der Betriebsstufe, in der sich der gemessene Beleuchtungsstärkewert befindet, und dann automatische Steuerung des Transmissionssollwerts des Glases entsprechend der bestimmten Betriebsstufe,

wobei eine Gütefunktion verwendet wird, um die aufeinanderfolgenden Beleuchtungsstärkestufen zu definieren, wobei die Gütefunktion von einer Vielzahl von Kriterien abhängt, um die aufeinanderfolgenden Beleuchtungsstärkestufen zu definieren, um eine große Anzahl von Betriebsstufen, wenn die Batterie vollständig geladen ist, und eine weniger große Anzahl von Betriebsstufen zu definieren, wenn die Batterie sich entlädt, um den Stromverbrauch der Vorrichtung zu verringern.

10. Verfahren nach Anspruch 9, das außerdem die Schritte enthält:

- der Sensor (8) speichert mindestens den minimalen Beleuchtungsstärkewert (Emin,hyst) und den maximalen Beleuchtungsstärkewert (Emax,hyst) einer aktuellen Stufe (P0) entsprechend einer aktuellen Transmission des Glases mit variabler Transmission (4), und

- die Berücksichtigung eines vom Sensor (8) gemessenen aktuellen Umgebungsbeleuchtungsstärkewerts (E) durch die Steuerschaltung (5) wird von dem Fall abhängig gemacht, in dem der Sensor (8) einen aktuellen Beleuchtungsstärkewert (E) niedriger als der minimale Beleuchtungsstärkewert (Emin,hyst) oder höher als der maximale Beleuchtungsstärkewert (Emax,hyst) der aktuellen Stufe (P0) während einer längeren Dauer als eine Auslösezeit (Δt) misst.

11. Steuerverfahren nach dem vorhergehenden Anspruch, wobei:

- nach dem Empfang des vom Sensor gemessenen aktuellen Umgebungsbeleuchtungsstärkewerts (E) die Steuerschaltung (5) eine neue aktuelle Stufe (P1) bestimmt, in der sich der gemessene Wert der Umgebungsbeleuchtungsstärke (E) befindet, und

- automatisch den Transmissionssollwert des Glases (4) entsprechend der neuen aktuellen Stufe (P1) steuert.

12. Steuerverfahren nach Anspruch 10, wobei:

- die Steuerschaltung (5) außerdem für jede Stufe (P) einen minimalen Sekundärwert (Emin) und einen maximalen Sekundärwert (Emax) bestimmt, wobei der minimale Wert (Emin,hyst) einer aktuellen Stufe (P0), den der Sensor (8) speichert, niedriger als der oder gleich dem minimalen Sekundärwert (Emin) dieser aktuellen Stufe (P0) ist, und der maximale Wert (Emin,hyst) einer aktuellen Stufe (P0), den der Sensor (8) speichert, höher als der oder gleich dem maximalen Sekundärwert (Emax) dieser aktuellen Stufe (P0) ist,

- nach Empfang des Werts der vom Sensor (8) gemessenen aktuellen Umgebungsbeleuchtungsstärke (E) die Steuerschaltung (5) eine neue aktuelle Stufe (P1) bestimmt, in der der gemessene Umgebungsbeleuchtungsstärkewert (E) zwischen dem minimalen Sekundärwert (Emin) und dem maximalen Sekundärwert (Emax) der neuen aktuellen Stufe (P1) liegt, und

- automatisch den Transmissionssollwert (Tv) des Glases (4) entsprechend der neuen aktuellen Stufe (P1) steuert.

13. Verfahren nach einem der Ansprüche 11 und 12, wobei, nach der Steuerung eines neuen Transmissionssollwerts (Tv) des Glases (4) entsprechend einer neuen aktuellen Stufe (P1) die Steuerschaltung (5) an den Sensor (8) den Wert der minimalen Beleuchtungsstärke (Emin,hyst) und den Wert der maximalen Beleuchtungsstärke (Emax,hyst) der neuen aktuellen Stufe (P1) zum Speichern im Speicher des Sensor (8) überträgt.

## Claims

1. Ophthalmic system comprising a variable-transmittance device (2) including at least:

- one battery,
- one variable-transmittance lens (4) and
- one control circuit (5) comprising at least one sensor (8) suitable for measuring an ambient light level (E) periodically, the control circuit (5) being suitable for automatically setting the transmittance value of the variable-transmittance lens (4) depending on the light level (E) measured by the sensor (8),

wherein the control circuit is suitable for:

- defining at least three successive light-level plateaus (P), each light-level plateau (P) being bounded by a minimum light-level value (Emin) and a maximum light-level value (Emax), and being associated with one transmittance setpoint value of the lens,
- determining the operational plateau in which the measured light-level value is located and then automatically commanding the transmittance setpoint value of the lens corresponding to the determined operational plateau,

the control circuit being suitable for using a merit function depending on a plurality of criteria to define the successive light-level plateaus so as to define a large number of operational plateaus when the battery is completely charged and a lower number of operational plateaus when the battery is discharged in order to decrease the electrical power consumption of the device.

2. Ophthalmic system (2) according to the preceding claim, wherein the measurement period (Tmes) of the sensor (8) is comprised between 5 milliseconds and 1 second.

3. Ophthalmic system (2) according to either one of the preceding claims, wherein the variation between two successive transmittance setpoint values (Tv) of the lens (4) is comprised between 0.05 and 0.6.

**4.** Ophthalmic system (2) according to any one of the preceding claims, comprising an adjusting mechanism (9) suitable for allowing a wearer of the device (2) to modify the transmittance setpoint values (Tv) and/or the minimum values (Emin) and/or the maximum values (Emax) of the light-level plateaus (P).

**5.** Ophthalmic system (2) according to any one of the preceding claims, wherein each of the transmittance setpoint values (Tv) of the lens (4) is comprised in one of the following intervals:

- between 0.80 and 1;
- between 0.43 and 0.80;
- between 0.18 and 0.43; and
- between 0.08 and 0.18.

**6.** Ophthalmic system (2) according to the preceding claim, wherein the transmittance setpoint values (Tv) of the lens (4) are respectively comprised in different intervals.

**7.** Ophthalmic system (2) according to any one of the preceding claims, wherein the control circuit (5) comprises a memory for storing the minimum and maximum light-level values (Emin, Emax) of the light-level plateaus (P).

**8.** System according to any one of Claims 1 to 7, wherein the lens is a photochromic lens, and said transmittance setpoint values (Tv) of the lens (4) depending on light level correspond to transmittance values of said photochromic lens.

**9.** Method for controlling the transmittance of a variable-transmittance lens (4) of a variable-transmittance device (2) of an ophthalmic system, said variable-transmittance device comprising a battery and a control circuit (5) including at least one sensor (8) suitable for measuring an ambient light level (E) periodically, the control circuit (5) being suitable for automatically setting the transmittance value of the variable-transmittance lens (4) depending on the ambient light level (E) measured by the sensor (8), the method including the steps, implemented by the control circuit (5), of:

- defining at least three successive light-level plateaus (P), each light-level plateau (P) being bounded by a minimum light-level value (Emin) and a maximum light-level value (Emax), and being associated with one transmittance setpoint value of the lens,
- determining the operational plateau in which the measured light-level value is located and then automatically commanding the transmittance setpoint value of the lens corresponding to the determined operational plateau,

wherein a merit function is used to define the successive light-level plateaus, said merit function depending on a plurality of criteria to define the successive light-level plateaus so as to define a large number of operational plateaus when the battery is completely charged and a lower number of operational plateaus when the battery is discharged in order to decrease the electrical power consumption of the device.

**10.** Method according to Claim 9, furthermore comprising steps in which:

- the sensor (8) stores in memory at least the minimum light-level value (Emin,hyst) and the maximum light-level value (Emax,hyst) of a current plateau (P0) corresponding to a current transmittance of the variable-transmittance lens (4), and
- the control circuit (5) acts on a current ambient light-level value (E), measured by the sensor (8), only once the sensor (8) has measured a current light-level value (E) lower than the minimum light-level value (Emin,hyst) or higher than the maximum light-level value (Emax,hyst) of the current plateau (P0) for a length of time longer than a triggering time ($\Delta$t).

**11.** Control method according to the preceding claim, wherein:

- after the current ambient light-level value (E) measured by the sensor has been received, the control circuit (5) determines a new current plateau (P1) in which the measured ambient light-level value (E) is located, and
- automatically commands the transmittance setpoint value of the lens (4) corresponding to the new current plateau (P1).

**12.** Control method according to Claim 10, wherein:

- the control circuit (5) furthermore defines, for each plateau (P), a secondary minimum value (Emin) and a secondary maximum value (Emax), the minimum value (Emin,hyst) of a current plateau (P0), stored by the sensor (8), being lower than or equal to the secondary minimum value (Emin) of this current plateau (P0), and the maximum value (Emin,hyst) of a current plateau (P0), stored by the sensor (8), being higher than or equal to the secondary maximum value (Emax) of this current plateau (P0),
- after the current ambient light-level value (E) measured by the sensor (8) has been received, the control circuit (5) determines a new current plateau (P1) in which the measured ambient light-level value (E) is comprised between the secondary minimum value (Emin) and the secondary maximum value (Emax) of the new current plateau (P1) and

- automatically commands the transmittance setpoint value (Tv) of the lens (4) corresponding to the new current plateau (P1) .

13. Method according to either of Claims 11 and 12, wherein, after a new transmittance setpoint value (Tv) of the lens (4) corresponding to a new current plateau (P1) has been commanded, the control circuit (5) transmits to the sensor (8) the minimum light-level value (Emin,hyst) and the maximum light-level value (Emax,hyst) of the new current plateau (P1), for storage in the memory of the sensor (8).

**FIG. 1**

$T_{v, cible} = f(E)$

**FIG. 2**

FIG. 3A

FIG. 3B

| $T_v$ | $[E_{min}\ E_{max}]$ | $[E_{min}\ E_{max}]_{hyst}$ | $\Delta t$ |
|---|---|---|---|
| 0,9 | [0 2000] | [0 2500] | |
| 0,55 | [2000 6000] | [1600 7500] | |
| 0,25 | [6000 20000] | [4800 25000] | 1,6 |
| 0,1 | [20000 - ] | [16000 - ] | |

## FIG. 4

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013048836 A1, BURT DAMIEN P
- WO 2008078320 A2, GROSS YOSSI
- US 2002154379 A1, TONAR WILLIAM L
- WO 2014087448 A1
- US 2015346517 A1, IIGAHAMA YUKIO

**Littérature non-brevet citée dans la description**

- **MAXIM.** *MAX44009 Industry's Lowest-Power Ambient Light Sensor with ADC,* 16 Avril 2013